(19) Europäisches Patentamt

European Patent Office

Office européen des brevets

(11) **EP 0 848 340 A1**

(12) **EUROPÄISCHE PATENTANMELDUNG**

(43) Veröffentlichungstag:
17.06.1998 Patentblatt 1998/25

(51) Int. Cl.⁶: **G06F 17/30**

(21) Anmeldenummer: 97121766.6

(22) Anmeldetag: 10.12.1997

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **11.12.1996 DE 19651527**

(71) Anmelder:
**SIEMENS AKTIENGESELLSCHAFT**
**80333 München (DE)**

(72) Erfinder: **Kakuschke, Chris**
**08527 Plauen (DE)**

(54) **Rechneranordnung und Verfahren zur Intervallschachtelung für ein Datenwort**

(57) In einer Rechneranordnung wird durch Verwendung eines programmierbaren Logikbausteins (PLA), der mit einem Prozessor (P) gekoppelt ist, ein begrenzter Befehlssatz des Prozessors (P) um mindestens einen Befehl, eine Intervallschachtelung erweitert. Der Befehl, der nicht in dem Befehlssatz des Prozessors (P) enthalten ist, wird in dem programmierbaren Logikbaustein (PLA) durch Logikfunktionen realisiert.

**FIG 6**

| Datenwort (12Bit) | 000000101101 bin | ～601 |

Bestimmen der Position des höchstwertigen Bits — 5 dez — 602

In welchem der folgenden Bittiefenbereiche liegt diese Position?

| Bereich | Nr. | binär |
| --- | --- | --- |
| 0..1 -> | 0 | 00 |
| 2..5 -> | 1 | 01 |
| 6..9 -> | 2 | 10 |
| 10..11 -> | 3 | 11 |

01 bin — 603

Bereichbits und relevante Datenbits nacheinander weiterreichen * — ... 01 101101 ... — 604

**Beschreibung**

**Technischer Hintergrund**

Die Erfindung betrifft die Intervallschachtelung für ein Datenwort.

Bei der zeitkritischen digitalen Verarbeitung von Signalen ist die Programmierung von Mikroprozessoren, die im weiteren als Prozessoren bezeichnet werden, auf Maschinenebene erforderlich. Die Prozessoren, insbesondere spezialisierte Mikroprozessoren, die sog. digitalen Signalprozessoren weisen einen begrenzten Befehlssatz auf. Die Maschinenbefehle der digitalen Signalprozessoren sind üblicherweise auf die beschleunigte Abarbeitung spezieller Algorithmen, z.B. Filterketten oder Fourier-Transformationen, ausgelegt. Eine zentrale Rolle spielen schnelle Multiplikationsbefehle und parallele Ladebefehle mit komfortablen Adressierungsvarianten.

Oftmals stellen sich aber andere Aufgaben, welche ohne zusätzliche Hardwareunterstützung nur entsprechend langsam bearbeitet werden und so für die gesamte Verarbeitungsdauer bestimmend sein können. In Abhängigkeit von den konkreten Daten variiert diese Zeit häufig sehr stark, so daß bei Echtzeitverarbeitung immer die maximalen Programmlaufzeiten kalkuliert werden müssen, auch wenn diese nur selten erforderlich sind.

Allgemein weist somit ein Prozessor lediglich einen begrenzten Befehlssatz auf, der insbesondere zur zeitkritischen digitalen Verarbeitung von Signalen oftmals Befehle nicht enthält, die für eine schnelle digitale Verarbeitung erforderlich wären.

Es ist aus dem Dokument [1] bekannt, je nach konkreter Aufgabenstellung Programmabschnitte für eine zeitkritische digitale Verarbeitung von Signalen durch zeitaufwendige Schleifenkonstruktionen mit datenabhängigen Abbruchkriterien zu realisieren. Die Programmabschnitte werden im weiteren als eine Folge von Befehlen bezeichnet. Es werden dabei zu einem digitalen digitalen Signalprozessor zusätzliche Fließ-Arithmetik- und Funktionsabschätzungs-Bibliotheken zu dem digitalen Signalprozessor bereitgestellt.

Eine weitere Möglichkeit, den Befehlssatz eines Prozessors anwendungsbezogen zu erweitern ist darin zu sehen, einen mächtigeren und somit wesentlich aufwendigeren und teureren Prozessor zu realisieren. Diese aufwendigeren Prozessorarchitekturen führen zu erhöhten Kosten für den Prozessor und seiner Peripherie oder sind nicht mit entsprechend erforderlich hoher Taktrate verfügbar.

Aus [2] ist es bekannt, für eine Mikroprozessoreinheit einen konfigurierbaren Coprozessor vorzusehen.

**Kurzbeschreibung der Erfindung**

Der Erfindung liegt das Problem zugrunde, eine Rechneranordnung sowie ein Verfahren zur Intervallschachtelung für ein Datenwort anzugeben, mit der bzw. mit dem eine Intervallschachtelung ausgeführt werden kann, wobei ein Befehl einer Intervallschachtelung in dem Befehlssatz eines Prozessors nicht enthalten ist.

Das Problem wird durch die Rechneranordnung gemäß Patentanspruch 1 sowie durch das Verfahren gemäß Patentanspruch 12 gelöst.

Die Rechneranordnung weist einen Prozessor mit einem begrenzten Befehlssatz sowie einen programmierbaren Logikbaustein auf. Der programmierbare Logikbaustein ist derart eingerichtet, daß eine Intervallschachtelung durchführbar ist. Ferner ist ein Speicher vorgesehen, der mindestens mit dem Prozessor gekoppelt ist.

Bei dem Verfahren gemäß Patentanspruch 12 wird das Datenwort (DW) von einem Prozessor (P) einem programmierbaren Logikbaustein (PLA) zugeführt. Von dem programmierbaren Logikbaustein (PLA) wird für das Datenwort (DW) eine Intervallschachtelung durchgeführt zur Ermittlung eines Intervalls, in dem das Datenwort (DW) liegt. Das ermittelte Intervall wird dem Prozessor (P) zugeführt.

Sowohl die Rechneranordnung als auch das Verfahren weisen eine Mehrzahl von Vorteilen auf.

Es ist durch die Rechneranordnung und mit dem Verfahren möglich, auf einfache Weise einen zusätzlichen Befehl der Intervallschachtelung, der nicht in dem Befehlssatz des Prozessors enthalten ist, in einer externen Peripherie zu realisieren.

Ferner wird die Durchführung des jeweiligen Befehls, den der Befehlssatz des Prozessors nicht explizit enthält, erheblich beschleunigt, da der Befehl in Form einer Logikfunktion in dem programmierbaren Logikbaustein realisiert ist, wodurch die Durchführung des Befehls mit einem Minimum an Takten des programmierbaren Logikbausteins möglich wird.

Dadurch wird es ferner möglich, auch eine zeitkritische Verarbeitung von digitalen Signalen zu realisieren, was mit dem Prozessor unter Umständen nicht möglich wäre, da dieser zur Realisierung eines entsprechenden Befehls eine aufwendigere und somit zeitaufwendigere Implementierung des jeweiligen Befehls mit dem Befehlssatz des Prozessors erfordert.

Eine Intervallschachtelung ist immer durch eine Logikfunktion darstellbar, die somit als ein zusätzlicher Befehl des Prozessors realisiert werden kann.

Vorteilhafte Weiterbildungen der Erfindung ergeben sich aus den abhängigen Ansprüchen.

Eine besondere Bedeutung gewinnt diese Rechneranordnung bzw. das Verfahren für den Fall, daß der Prozessor ein digitaler Signalprozessor (DSP) ist, da ein digitaler Signalprozessor einen im Vergleich zu sogenannten CISC-Prozessoren (Complex Instruction Set Computer) eng begrenzten Befehlssatz aufweist, der insbesondere auf Additionen und Multiplikationen spezialisiert ist und beispielsweise eine im weiteren beschriebene Intervallschachtelung nur unter erheblichem Aufwand realisieren kann. Somit ist eine zeitkritische Implementierung einer Intervallschachtelung mit einem üblichen digitalen Signalprozessor nicht realisierbar, ohne einen oftmals unvertretbar hohen Anteil der Rechenleistung auf dieses Problem zu konzentrieren.

Ferner ist es in einer Weiterbildung der Rechneranordnung vorteilhaft, den programmierbaren Logikbaustein als Field-Programmable-Gate-Array (FPGA) zu realisieren, da dadurch eine sehr einfache, reversible und flexible Realisierung unterschiedlicher Befehle in Form von Logikfunktionen oder auch unterschiedlicher, im weiteren beschriebener Intervallschachtelungen möglich wird.

Dieser Vorteil gilt ebenso für den Fall, daß der programmierbare Logikbaustein ein sog. ASIC ist.

Weiterhin ist es vorteilhaft, bei der Intervallschachtelung eine logarithmische Skalierung der Intervalle zu realisieren, da auf diese Weise insbesondere eine Approximation einer Funktion mit intervallabhängigen Polynomen möglich wird, bei dem eine Funktion mit starken Anstiegsänderungen in der Nähe eines vorgebbaren Wertes, beispielsweise dem Wert 0, gut angenähert werden kann. Viele bei der Signalverarbeitung vorkommende Funktionsausdrücke, wie Polynomialbrüche mit z. T. nicht ganzzahligen Exponenten

$$( \sqrt{x} , \frac{1}{x} , \frac{1}{x^2} )$$

oder Logarithmusfunktionen, fallen in diese Kategorie oder lassen sich durch Addition im Argument dorthin überführen. Auch kompliziertere stetige Funktionen mit mehreren Argumenten lassen sich durch die geringe Anzahl der erforderlichen Polynome noch gut annähern, so daß mehrere Arithmetikoperationen ohne Fehlerfortpflanzung ersetzt werden können.

Ferner ist es in einer Weiterbildung des Verfahrens vorteilhaft, während der Durchführung des Befehls durch den programmierbaren Logikbaustein in dem Prozessor beliebige weitere Befehle gleichzeitig weiter zu verarbeiten, um somit eine Prallelverarbeitung von Befehlen zu realisieren, wodurch die Verarbeitung der zeitkritischen Applikation zusätzlich beschleunigt wird.

Weiterhin kann ein speziell abgestimmtes Pipelining in diesem Baustein die Verarbeitungszeit und die benötigten Ressourcen weiter verringern.

Sowohl die Rechneranordnung als auch das Verfahren können in verschiedenen Anwendungsgebieten sehr vorteilhaft eingesetzt werden, z.B. bei der Approximation von Funktionswerten beliebiger stetiger Funktionen, bei der Fließ-Arithmetik insbesondere auch Prozessoren mit Integer-Format oder auch bei der verlustfreien oder der verlustbehafteten Datenkompression.

**Kurzbeschreibung der Figuren**

In den Figuren ist ein Ausführungsbeispiel der Erfindung dargestellt, welches im weiteren näher erläutert wird. Es zeigen

Fig. 1 ein Blockdiagramm, in dem die Rechneranordnung mit einigen Weiterbildungen skizzenhaft dargestellt ist;
Fig. 2 eine skizzenhafte Darstellung einer Intervallschachtelung, die mit dem programmierbaren Logikbaustein durchgeführt wird;
Fig. 3 ein Ablaufdiagramm, in dem das Verfahren dargestellt ist;
Fig. 4 ein Ablaufdiagramm, in dem die Verwendung des Verfahrens zur Approximation einer Funktion dargestellt ist;
Fig. 5 ein Ablaufdiagramm, in dem die Verwendung des Verfahrens in der Fließ-Arithmetik beschrieben ist;
Fig. 6 ein Blockdiagramm, in dem die Verwendung des Verfahrens zur Datenkompression dargestellt ist.

**Figurenbeschreibung**

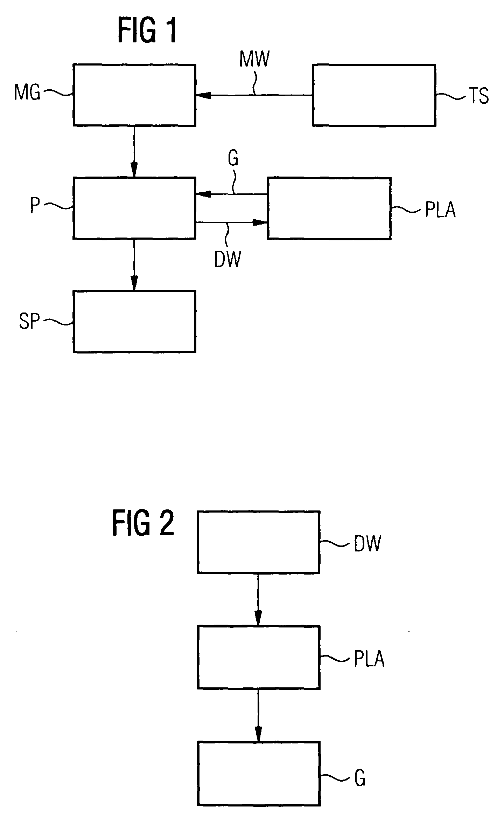

In Fig. 1 ist ein Prozessor P, mindestens ein programmierbarer Logikbaustein PLA, ein Speicher SP sowie ein Meßgerät MG zur Messung von Meßwerten MW aus einem beliebigen technischen System TS, dargestellt.

Der Prozessor P ist ein beliebiger programmierbarer Prozessor mit einem beschränkten Befehlssatz. Der Prozessor P ist beispielsweise ein digitaler Signalprozessor DSP, der auf vorgegebene Funktionen, beispielsweise Additionen und Multiplikationen spezialisiert ist.

Der programmierbare Logikbaustein PLA ist ein beliebiger programmierbarer Logikbaustein, ein sog. Programmable-Logic-Array (PLA), der beispielsweise auch als Field-Programmable-Gate-Array (FPGA) oder als ASIC ausgestaltet sein kann.

Der Prozessor P ist sowohl mit dem programmierbaren Logikbaustein PLA als auch mit dem Speicher SP gekoppelt. Ferner ist der Prozessor P in einer Weiterbildung der Erfindung mit dem Meßgerät MG gekoppelt.

Mit dem Meßgerät MG werden entsprechend der Anwendung für das technische System TS beispielsweise analoge Meßwerte aufgenommen, eventuell in digitale Signale umgewandelt und dem Prozessor P zur weiteren Verarbeitung zugeführt.

Mit dem Prozessor P wird eine beliebige Folge von Programmbefehlen durchgeführt, beispielsweise eine digitale Signalverarbeitung.

Es ist allgemein eine beliebige Anzahl programmierbarer Logikbausteine PLA vorgesehen.

Durch den programmierbaren Logikbaustein PLA wird mittels der zusätzlichen Hardware der beschränkte Befehlssatz des Prozessors P um mindestens einen Befehl erweitert. Im weiteren wird als ein Befehl, der durch den programmierbaren Logikbaustien PLA realisiert wird, ohne Einschränkung der Allgemeingültigkeit eine Intervallschachtelung eines von dem Prozessor P dem programmierbaren Logikbaustein PLA zugeführten Datenwortes beschrieben.

Dies dient lediglich der besseren Darstellbarkeit und schränkt die Allgemeingültigkeit der Erfindung, die darin zu sehen ist, daß durch den programmierbaren Logikbaustein PLA mindestens ein zusätzlicher Befehl, der nicht in dem Befehlssatz des Prozessors P enthalten ist, realisiert wird, nicht ein.

Der programmierbare Logikbaustein PLA ist beispielsweise über eine Adreßanbindung (nicht dargestellt) und/oder eine Datenbusanbindung (nicht dargestellt) mit dem Prozessor P gekoppelt.

Das Prinzip der Intervallschachtelung, die in dem programmierbaren Logikbaustein PLA durchgeführt wird, ist in Fig. 2 dargestellt.

Ein Datenwort DW, welches eine beliebige Anzahl von Bits aufweist, wird dem programmierbaren Logikbaustein PLA zugeführt. Abhängig von dem Datenwort DW wird in dem programmierbaren Logikbaustein PLA ein Intervall ermittelt, in dem sich das Datenwort DW befindet. Als Ergebnis wird von dem programmierbaren Logikbaustein PLA beispielsweise eine Intervallnummer G, mit dem das jeweilige Intervall bzw. eine mit dem Intervall verknüpfte Information in einer Koeffiztententabelle in dem Speicher SP gespeichert ist, ermittelt und dem Prozessor P zugeführt.

Ohne Einschränkung der Allgemeingültigkeit wird in den weiteren Ausführungen eine univeselle Intervallschachtelung für verschiedene Anwendungen auf das Datenformat des in dem Dokument [1] beschriebenen Systems Bezug genommen, welches 24 Bit Datenwörter DW unterstützt, die einerseits beispielsweise als Festkomma-Werte im Wertebereich von -1 bis +1 interpretiert werden können oder direkt als hexadezimale Basis dienen können.

Das mit der Nr. 23 bezeichnete Bit wird als Vorzeichenbit im Festkomma-Format interpretiert und wird in diesem Spezialfall vorzugsweise bei der Intervallschachtelung des Betrages vorerst vernachlässigt. Dieses Datenformat stellt lediglich eine einfache Darstellung des Prinzips der Erfindung dar. Das Datenformat ist jedoch nicht für die Erfindung erforderlich. Es kann allgemein ein Datenwort DW mit einer beliebigen Anzahl von Bits und einer beliebigen Interpretation der Datenworte in der Rechneranordnung verarbeitet werden.

Allgemein ist die Intervallschachtelung anhand einer frei vorgebbaren Einteilung von Intervallen und der entsprechenden Zuordnung der Datenworte DW zu dem jeweiligen Intervall gegeben. Eine mögliche Realisierung einer solchen Interverallschachtelung ist in der folgenden Tabelle beispielhaft dargestellt.

Dabei ist sowohl die binäre Darstellung mit der entsprechenden Bitwertigkeit, der zugehörige jeweilige hexadezimale Wert sowie die Darstellung des jeweiligen Wertes in der Festkommadarstellung und die Zuordnung des jeweiligen Intervalls, das im Bereich zu der nächsten Zahl der Tabelle zugeordneten Intervallnummer G dargestellt.

**BIT (*23 ist Vorzeichen*) hexadezimal Festkomma Intervallnummer**

3210987654321098765543210

22221111111111


```
00000000000000000000000001  =         1  = 0,000000119    0
00000000000000000000000010  =         2  = 0,000000238    1
00000000000000000000000100  =         4  = 0,000000476    2
00000000000000000000001000  =         8  = 0,000000953    3
00000000000000000000010000  =        16  = 0,000001907    4
00000000000000000000100000  =        32  = 0,000003814    5
00000000000000000001000000  =        64  = 0,000007629    6
00000000000000000010000000  =       128  = 0,000015258    7
00000000000000000100000000  =       256  = 0,000030517    8
00000000000000001000000000  =       512  = 0,000061035    9
00000000000000010000000000  =      1024  = 0,000122070   10
00000000000000100000000000  =      2048  = 0,000244141   11
00000000000001000000000000  =      4096  = 0,000488281   12
00000000000010000000000000  =      8192  = 0,000976562   13
00000000000100000000000000  =     16384  = 0,001953125   14
00000000001000000000000000  =     32768  = 0,003906250   15


00000001000000000000000000  =     65536  = 0,007812500   16
00000010000000000000000000  =    131072  = 0,015625000   17
00000100000000000000000000  =    262144  = 0,031250000   18
00001000000000000000000000  =    524288  = 0,062500000   19
00010000000000000000000000  =   1048576  = 0,125000000   20
00011000000000000000000000  =   1572864  = 0,187500000   21
00100000000000000000000000  =   2097152  = 0,250000000   22
00101000000000000000000000  =   2621440  = 0,312500000   23
00110000000000000000000000  =   3145728  = 0,375000000   24
00111000000000000000000000  =   3670016  = 0,437500000   25
01000000000000000000000000  =   4194304  = 0,500000000   26
01010000000000000000000000  =   5242880  = 0,625000000   27
01100000000000000000000000  =   6291456  = 0,750000000   28
01110000000000000000000000  =   7340032  = 0,875000000   29
```


Eine durch eine Tabelle beschriebene Werteeinteilung eines Wertebereichs in eine vorgebbare Anzahl von Intervallen kann beispielsweise durch Verwendung sogenannter JEDEC-Dateien in Form von Hardware-Logikverknüpfungen beschrieben werden.

Eine JEDEC-Datei wird bei sog. Field-Programmable-Gate-Arrays (FPGA) verwendet, wobei die JEDEC-Datei dem FPGA zugeführt werden und durch ein sogenanntes Downloaden in dem FPGA oder ASICs umgesetzt werden. Die Umsetzung der Intervalle in die JEDEC-Dateien oder anderer, nicht standardisierter Datenformate einzelner Schaltkreisanbieter sind dem Fachmann hinreichend bekannt.

Die Intervallschachtelung bzw. allgemein der in dem programmierbaren Logikbaustein PLA realisierte Befehl wird in Form einer Logikfunktion realisiert.

Die dazu erforderlichen Bitoperationen werden in dem programmierbaren Logikbaustein PLA durchgeführt, der beispielsweise über Input/Output-Befehle (I/O-Befehle) oder über virtuelle Speicherzugriffe in die Programmabarbeitung des Prozessors P eingebunden ist und auf diese Weise mit dem Prozessor P gekoppelt ist.

Es ist in einer Weiterbildung ferner vorgesehen, daß der programmierbare Logikbaustein PLA mit dem Speicher SP gekoppelt ist.

Durch Verwendung eines programmierbaren Logikbausteins PLA ist es somit möglich, eine schnelle und kostengünstige monolitische Lösung zur Erweiterung des Befehlssatzes des Prozessors P zu realisieren.

Wie in Fig. 2 dargestellt ist, wird beispielsweise von dem programmierbaren Logikbaustein PLA allgemein das Ergebnis des Befehls, beispielsweise in Form einer Intervallnummer G, mit der in einer Koeffiziententabelle ein Eintrag von Koeffizienten indiziert wird, an den Prozessor P zugeführt oder allgemein zur beliebigen Weiterverarbeitung zur Verfügung gestellt.

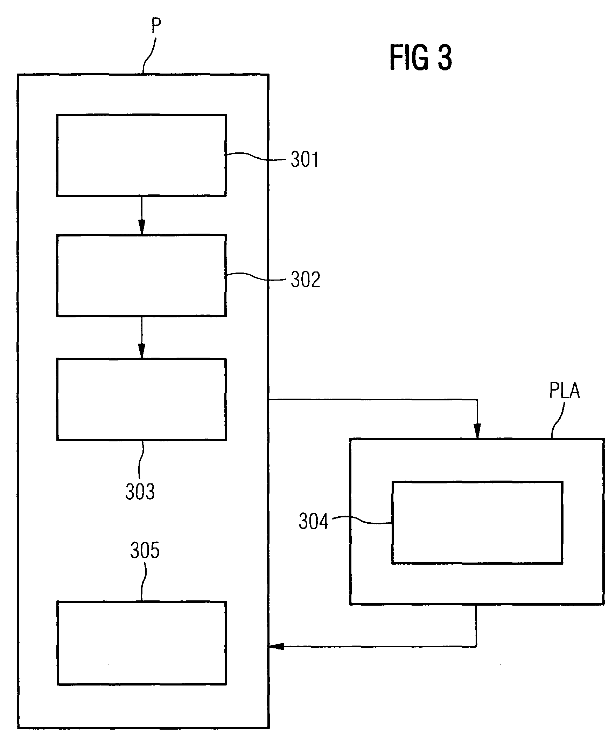

In Fig. 3 ist in Form eines Ablaufdiagramms eine Verwendung der Intervallschachtelung, die in dem programmierbaren Logikbaustein PLA realisiert wird, zur näherungsweisen Ermittlung von Funktionswerten beliebiger stetiger Funktionen, dargestellt.

Allgemein kann eine beliebige Funktion, die vorzugsweise stetig ist, durch Aufteilung der Funktion in eine beliebige Anzahl von Teilabschnitten, in denen jeweils der Verlauf der zu approximierenden Funktionen den jeweiligen Teilabschnitt mit einem Polynom approximiert wird, approximiert werden. Es können in jedem Teilabschnitt Polynomen mit unterschiedlichen Koeffizienten zur Approximation verwendet werden.

Es ist vorteilhaft, lediglich polynomiale Funktionen beliebigen Grades zur Approximation zu verwenden. Zu Beginn der Approximation wird jeweils eine Koeffiziententabelle vorgegeben, mit der für die einzelnen Intervalle jeweils Koeffizienten angegeben werden, mit denen jeweils eine polynomiale Funktion gebildet wird, mit der die zu approximierende Funktion in dem jeweiligen Intervall angenähert wird.

Somit ist die Approximation der Funktion auf eine Folge von Multiplikationen und Additionen zurückgeführt, die beispielsweise in einem digitalen Signalprozessor (DSP) sehr schnell durchgeführt werden können, wodurch eine zeitkritische Verarbeitung digitaler Signale erheblich schneller erfolgen kann.

Allgemein wird jeweils die Funktion in einem Teilabschnitt beispielsweise durch eine polynomische Näherungsfunktion folgenden Aufbaus angenähert:

$$F(x) = a_0 + a_1 \cdot x + A_2 \cdot x^2 + ... + a_i \cdot x^i + ... a_n \cdot x^n$$

Mit $a_i$ wird jeweils ein Koeffizient der polynomischen Näherungsfunktion für den jeweiligen Teilabschnitt bezeichnet. Mit n wird der Grad der Funktion, der für Approximition verwendet wird, bezeichnet.

Bei dem Verfahren wird eine Folge von Programmbefehlen von dem Prozessor P verarbeitet, wobei die Folge von Programmbefehlen mindestens einen Befehl aufweist, der nicht in dem Befehlssatz des Prozessors P enthalten ist 301.

Der jeweilige Befehl, der nicht in dem Befehlssatz des Prozessors P enthalten ist, wird dem programmierbaren Logikbaustein PLA zugeführt 302.

Der Befehl wird von dem programmierbaren Logikbaustein PLA ausgeführt 303.

Das Ergebnis des Befehls wird von dem programmierbaren Logikbaustein PLA in einem letzten Schritt 305 zur Weiterverarbeitung zur Verfügung gestellt, beispielsweise dem Prozessor P wieder zugeführt.

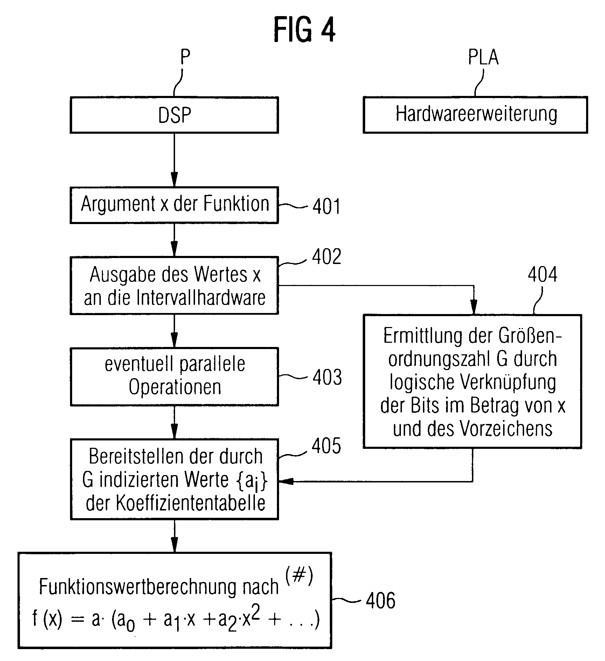

Der Spezialfall der Verwendung des Verfahrens und der Rechneranordnung zur Approximation einer beliebigen Funktion ist in Fig. 4 dargestellt.

Dabei wird in einem ersten Schritt 401 das Datenwort DW in Form eines Argumentes der zu approximierenden Funktion ermittelt.

Das Datenwort DW wird dem programmierbaren Logikbaustein in einem weiteren Schritt 402 zugeführt.

In dem programmierbaren Logikbaustein PLA wird der Befehl, beispielsweise die Ermittlung der Intervallangabe durch logische Verknüpfung der Bits im Betrag des Datenwortes DW unter eventueller Berücksichtigung des Vorzeichens, der beispielsweise durch das Bit 23 bei dem zuvor beschriebenen Datenformat bezeichnet wird, ermittelt 404.

Parallel dazu ist es in einer Weiterbildung vorgesehen, daß möglicherweise in der Zeit, das in dem programmierbaren Logikbaustein PLA die Intervallnummer G ermittelt wird, andere Befehle von dem Prozessor P durchgeführt werden 403.

Nachdem von dem programmierbaren Logikbaustein PLA die Intervallnummer G dem Prozessor P zugeführt wurde, wird in dem Prozessor P aus der Koeffiziententabelle der Satz vom Koeffizienten $a_i$, der in dem Teilabschnitt zur Bildung der polynomischen Näherungsfunktion verwendet wird, ermittelt. Dies erfolgt durch einfaches Auslesen der durch die Intervallnummer G indizierten Datenstruktur der Koeffiziententabelle 405.

In einem letzten Schritt 406 wird abhängig von dem Datenwort DW und den ermittelten Koeffizienten $a_i$ der Wert der zu approximierenden Funktion näherungsweise ermittelt.

In einer Weiterbildung ist es vorteilhaft, einen gemeinsamen Faktor aller Koeffizienten $a_i$, die in dem jeweiligen Intervall verwendet werden, auszuklammern. Auf diese Weise kann ein numerischer Überlauf verhindert werden.

Weiterhin ist es in einer Weiterbildung des Verfahrens sowie der Rechneranordnung vorteilhaft, daß eine schnelle Abschätzung der Größenordnung des Datenwortes DW durchgeführt wird.

Bei gesonderter Auswertung des Vorzeichens des Datenwortes DW ist es ferner möglich, auch nichtsymmetrische Funktionen im gesamten Wertebereich von -1 bis +1 anzunähern.

Allgemein kann das Prinzip für jede beliebige Funktion angewendet werden, auch wenn dieses spezielle Beispiel insbesondere für eine adaptierte Näherungsfunktion für Festkommazahlen mit einem Betrag kleiner 1 dargestellt wurde.

Ferner ist es in einer Weiterbildung vorgesehen, die Aufteilung der Intervalle mit einer logarithmischen Skalierung durchzuführen, wodurch Funktionen mit starken Anstiegsänderungen in der Nähe eines vorgebbaren Wertes, beispielsweise in der Nähe des Wertes 0 besonders gut approximiert werden können.

Viele bei der Signalverarbeitung vorkommende Funktionsausdrücke, wie Polynomialbrüche mit z.B. nicht ganzzahligen Exponenten, beispielsweise die Funktionen

$$\sqrt{x}, \frac{1}{x}, \frac{1}{x^2}$$

oder auch Logarithmusfunktionen, fallen in diese Kategorie oder lassen sich durch Additionen im Argument dorthin überführen.

Um die Genauigkeit der Näherung im meist entscheidenden Festkommawertebereich nahe dem Wert 1 zu erhöhen, ist es in einer Weiterbildung vorgesehen, auch noch die dem höchstwertigen Bit folgenden Stellen mit in die Ermittlung der Intervallnummer G einfließen zu lassen. Dies ist in der oben beschriebenen Tabelle dargestellt. Damit sind bei der in diesem Ausführungsbeispiel beispielhaft dargestellten Implementierung auch eine größere Anzahl von Intervallen als 23, was der Bittiefe des Festkommabetrages des Arguments x entspricht, möglich. Wird das höchstwertige Bit als Vorzeichenbit interpretiert, so wird eine Verdoppelung der berücksichtigten Intervalle in der Intervallschachtelung erreicht.

Ferner kann sowohl das Verfahren als auch die Rechneranordnung sehr vorteilhaft zur Beschleunigung von Fließkommaoperationen bei Prozessoren P mit Integerformat eingesetzt werden.

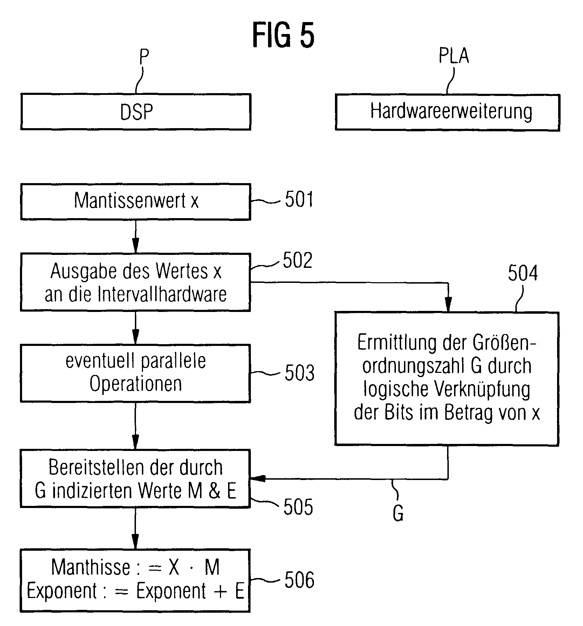

Ein Ablaufdiagramm, welches eine solche Verwendung beispielhaft darstellt, ist in Figur 5 beschrieben.

Bei dieser Verwendung ist es beispielsweise überflüssig, eine streng logarithmische Skalierung der Intervalle vorzunehmen. Die Intervallnummer G, die von dem programmierbaren Logikbaustein PLA ermittelt wird, dient wiederum zur Indizierung der eigentlichen Parameter im Rahmen der Fließkommaoperationen.

Es ist in einer Weiterbildung vorgesehen, die für die Fließkommaoperation verwendeten Paramter mehrfach in der Koeffiziententabelle einzutragen, wenn die allgemein gehaltene Intervallschachtelung stellenweise eine feinere Granulation als die logarithmische Intervallschachtelung besitzt. Auf diese Weise wird die Durchführung des Verfahrens erheblich beschleunigt, ohne daß der benötigte Speicherplatzbedarf wesentlich vergrößert wird, da der Speicherplatzbedarf der Koeffiziententabellen in jedem Fall klein gegenüber üblichen Datenpuffern oder Look-Up-Tabellen bei der Signalverarbeitung bleibt.

Von dem Prozessor P wird in einem ersten Schritt 501 ein Datenwort DW in Form des Mantissenwertes ermittelt und in einem weiteren Schritt 502 dem programmierbaren Logikbaustein PLA zugeführt.

In dem programmierbaren Logikbaustein PLA wird die Intervallnummer G wiederum durch logische Verknüpfung der Bits in dem Betrag von dem Datenwort DW ermittelt 504.

Ferner ist es in einer Weiterbildung des Verfahrens und der Rechneranordnung vorgesehen, daß parallele Operationen in dem Prozessor P durchgeführt werden, während die Intervallnummer G ermittelt wird, allgemein der Befehl in dem programmierbaren Logikbaustein PLA durchgeführt wird 503.

Mit der Intervallnummer G wird wiederum eine Datenstruktur, d. h. ein Eintrag in der Koeffiziententabelle angegeben, die von dem Prozessor P ausgelesen werden.

Die durch die Intervallnummer G indizierten Werte in der Koeffiziententabelle werden zur Anpassung der Mantisse und des Exponenten der jeweiligen Fließkommazahl verwendet 505.

Nach einer Kließkommaberechnung auf einem Integer-Prozessor muß die Mantisse linksbündig korrigiert werden, um ein gültiges Format für die nächste Operation zu erzeugen. Dies ist üblicherweise ein sehr zeitaufwendiger Abschnitt und kann die eigentliche Operationsdauer z.B. bei einer Addition, einer Subtraktion und einer Multiplikation weit übersteigen. Die anzupassende Mantisse wird der Intervallschachtelungshardware übergeben und der rückübergebene Index (die Intervallnummer G) adressiert sowohl einen Faktor für die Mantissenanpassung als auch den korrespondierenden Summanden für den Exponenten (Schritt 506).

Ferner ist es vorteilhaft, sowohl das Verfahren als auch die Rechneranordnung mit den Weiterbildungen der Intervallschachtelung zur verlustbehafteten und/oder zur verlustfreien Datenkompression zu verwenden.

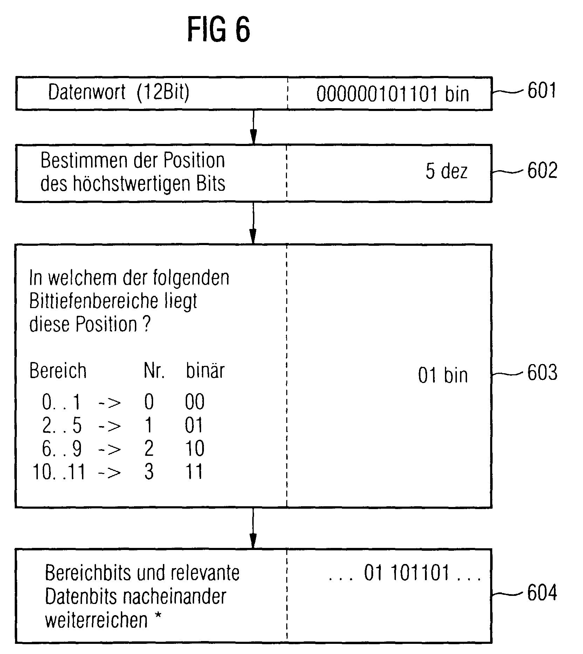

Dazu wird beispielsweise das in Fig. 6 in Form eines Ablaufdiagramms beschriebene Verfahren zur Integerlängenanpassung mit dem Prozessor P durchgeführt.

Es ist in einer Weiterbildung vorteilhaft, die nicht genutzten höherwertigen Bits in dem Datenwort DW als Ansatzpunkt für eine Informationsverdichtung zu verwenden. Solche Algorithmen bewirken v. a. nach der Digitalisierung eines Signals in einem vorgegebenen großen, aber nur punktuell ausgenutzten Dynamikbereich eine drastische Reduzierung des Datenaufkommens.

Diese Vorgehensweise eignet sich besonders für Einsatzgebiete der effizienten Übertragung und Speicherung experimentell gewonnener Signalsamples, bei deren Generierung der Dynamikbereich beispielsweise eines Analog/Digital-Wandlers bewußt nicht bis zu den technischen Grenzen ausgelastet wird. Eine später vollständig reversible digitale Differenzierung des Signals kann zusätzlich die Bittiefe der Samplewerte im Mittel weiter verringern, wenn im Signal hauptsächlich tiefe Frequenzen dominieren oder wenn ein sog. Oversampling vorliegt.

Dabei wird in einem ersten Verfahrensschritt 601 beispielsweise von dem Meßgerät MG ein Datenstrom wortweise dem Prozessor P zugeführt und von dem Prozessor P jeweils das Datenwort DW empfangen.

In diesem einfachen Ausführungsbeispiel weist das Datenwort DW 12 Bit auf. Die Vorgehensweise wird an folgendem beispielhaft dargestellten Datenwort DW erläutert:
0 0 0 0 0 0 1 0 1 1 0 1 (in binärer Zahlendarstellung).

In einem zweiten Schritt 602 wird von dem Prozessor P die Position des höchstwertigen Bits mit dem Wert logisch 1 ermittelt. In diesem Fall ist die Position des höchstwertigen Bits die Position mit dem dezimalen Wert 5.

Zur Datenkompression wird der sog. Bittiefenbereich in eine vorgebbare Anzahl von Intervallen aufgeteilt. In diesem Beispiel werden 4 Intervalle verwendet:

In einem ersten Bereich der Bittiefe von 0 bis 1 wird ein erstes Intervall binär mit zwei Bits, die beide den Wert logisch 0 aufweisen, bezeichnet. Ein zweites Intervall bezeichnet einen Bittiefebereich von 2 bis 5 und wird binär durch ein erstes Bit mit dem logischen Wert 0 und einem zweiten Bit mit dem logischen Wert 1 bezeichnet. Ein drittes Intervall beschreibt einen Bittiefebereich von 6 bis 9 und wird binär mit einem ersten Bit mit dem logischen Wert 1 und dem zweiten Bit mit dem logischen Wert 0 bezeichnet. In dem vierten Intervall wird die Bittiefe von 10 - 11 beschrieben, welches mit zwei Bits, die beide den Wert logisch 1 aufweisen, bezeichnet wird.

In einem weiteren Schritt 603 wird die Position des höchstwertigen Bits auf das jeweilige Intervall des Bittiefenbereichs abgebildet. Dies entspricht wiederum der Zuordnung eines Intervalls, welches mit dem programmierbaren Logikbaustein PLA durchgeführt wird.

Als Ergebnis wird von dem programmierbaren Logikbaustein PLA eine Intervallnummer G, beispielsweise für diesen Spezialfall der binäre Wert 01 an den Prozessor P zurückgeliefert.

Zur Datenkompression ist es somit möglich, in einem letzten Schritt 604 sowohl die Bereichbits, mit denen die Bittiefe angegeben wird, in diesem Fall zwei Bits mit den Werten 0 und 1 und die eigentlichen relevanten Datenbits des Datenwortes DW, beginnend mit dem höchstwertigen Bit mit dem Wert 1 codiert.

Es ergibt sich z.B. für das Datenwort
0 0 0 0 0 0 1 0 1 1 0 1,
bei dem das erste Bit ein Vorzeichenbit ist, und somit bei der Einteilung nicht berücksichtigt werden braucht, folgende "komprimierte" Darstellungen des Datenwortes DW:
0 1 1 0 1 1 0 1.

In einer Weiterbildung des Verfahrens ist es vorteilhaft, für den Fall, daß ein Bittiefenbereich genau einer Bitlänge zugeordnet ist, die führende 1 in dem Datenwort DW nicht zu übertragen. Durch diese Weiterbildung wird eine weitere Datenkompression und somit eine geringere benötigte Übertragungsrate erreicht.

Das Verdichtungsverhältnis in diesem oben beschriebenen Beispiel des Datenwortes DW mit dem Wert 0 0 0 0 0 0 1 0 1 1 0 1 betragt in diesem Beispiel 67 %.

Das Verdichtungsverhältnis kann durch eine individuelle Festlegung von den einzelnen Intervallen, d. h. Bittiefenbereichen und den entsprechenden Grenzen mit Hilfe beispielsweise eines sog. Datenhistogrammes bei der Datenkompression weitergestaltet werden.

Darüberhinaus ist es in einer Weiterbildung ferner vorgesehen, statt der tatsächlichen Bittiefe nur die Änderung der Bittiefe im Vergleich zu einem Vorgängerwert zu übertragen.

Ferner ist es in einer Weiterbildung vorgesehen, nicht direkt verwendete Bereichsnummern als Markierungen für vorgebbare, mit der jeweiligen Bitfolge zugeordneten semantischen Operation vorzusehen, beispielsweise um eine Änderung der Komprimierungstrategie für die Datendekompression zu protokollieren und somit eine flexible Kompression und Dekompression durchführen zu können. Eine Änderung der Komprimierungsstrategie kann beispielsweise darin zu sehen sein, daß zwischen der Komprimierung des Originalsignals und der Ableitung des Signals, zwischen einer direkten bzw. rekursiven Tiefe sowie zwischen einer Interpretation des Vorzeichens gewechselt werden kann.

Auch eine Kombination mit einem sog. Run-Lenght-Codierungs-Verfahren für Signale mit zeitweiliger Konstanz der Datenworte DW sind in einer Weiterbildung des Verfahrens zu sehen.

Bei verlustbehafteten Varianten des Verfahrens ergeben sich beispielsweise durch das Vernachlässigen von niederwertigen Datenbits ab einer bestimmten Bittiefe. Dies könnte selbst bei der Meßwertsicherung nach einer krititschen Betrachtung der effektiven Dynamikbereiche einzelner analoger Komponenten der Übertragungsstrecke bei Verwendung des Verfahrens bzw. der Rechneranordnung in der Meßtechnik sinnvoll sein oder bei kontinuierlicher Abtastung die Transferrate über eine langsame Schnittstelle begrenzen helfen.

Ferner ist es in einer Weiterbildung vorgesehen, auch zur Bestimmung des höchstwertigen Bits oder für eine Bildung der Datenhistogramme in optimierten Algorithmen wiederum den programmierbaren Logikbaustein PLA vorteilhaft zu verwenden.

Im Rahmen dieses Dokumentes wurden folgende Veröffentlichungen zitiert:

[1] Im Dezember 1995 im Internet erhältlich: ftp://nyqiuist.ee.ualberta.ca/pup/motorola/dsp56k

[2] WO 9406077

**Patentansprüche**

1. Rechneranordnung,

   - mit einem Prozessor (P), der einen begrenzten Befehlssatz aufweist,
   - mit einem programmierbaren Logikbaustein (PLA), der derart eingerichtet ist, daß eine Intervallschachtelung durchführbar ist, und
   - mit einem Speicher (SP), der zumindest mit dem Prozessor (P) gekoppelt ist.

2. Rechneranordnung nach Anspruch 1,
   bei der der Prozessor (P) ein digitaler Signalprozessor (DSP) ist.

3. Rechneranordnung nach Anspruch 1 oder 2,
   bei der der programmierbaren Logikbaustein (PLA) ein Field-Programmable-Gate-Array (FPGA) ist.

4. Rechneranordnung nach Anspruch 1 oder 2,
   bei der der programmierbare Logikbaustein (PLA) ein ASIC ist.

5. Rechneranordnung nach einem der Ansprüche 1 bis 4,
   bei der der programmierbare Logikbaustein (PLA) derart ausgebildet ist, daß die Intervallschachtelung mit einer logarithmischen Skalierung der Intervalle erfolgt.

6. Rechneranordnung nach einem der Ansprüche 1 bis 5,
   eingesetzt zur näherungsweisen Ermittlung von Funktionswerten einer Funktion.

7. Rechneranordnung nach einem der Ansprüche 1 bis 5,
   eingesetzt zur näherungsweisen Ermittlung von Funktionswerten einer polynomialen Funktion.

8. Rechneranordnung nach einem der Ansprüche 1 bis 5,
   eingesetzt zur näherungsweisen Ermittlung von Funktionswerten einer Funktion,

   - bei der die Funktion eine polynomiale Funktion ist, und
   - bei der ein gemeinsamer Faktor der Koeffizienten der polynomialen Funktion ausgeklammert wird.

9. Rechneranordnung nach einem der Ansprüche 1 bis 5,
   eingesetzt zur Durchführung von Fließkommaarithmetik.

**10.** Rechneranordnung nach einem der Ansprüche 1 bis 5,
eingesetzt zur Datenkompression.

**11.** Rechneranordnung nach einem der Ansprüche 1 bis 5,
eingesetzt zur Datenkompression, wobei zusätzlich eine Lauflängencodierung durchgeführt wird.

**12.** Vefahren zur rechnergestützten Intervallschachtelung für ein Datenwort (DW),

- bei dem das Datenwort (DW) von einem Prozessor (P) einem programmierbaren Logikbaustein (PLA) zugeführt wird,
- bei dem von dem programmierbaren Logikbaustein (PLA) für das Datenwort (DW) eine Intervallschachtelung durchgeführt wird zur Ermittlung eines Intervalls, in dem das Datenwort (DW) liegt,
- bei dem das ermittelte Intervall dem Prozessor (P) zugeführt wird.

**13.** Verfahren nach Anspruch 12,
bei dem während der Durchführung des Befehls durch den programmierbaren Logikbaustein (PLA) in dem Prozessor (P) weitere Befehle verarbeitet werden.

**14.** Verfahren nach Anspruch 12 oder 13,
eingesetzt zur näherungsweisen Ermittlung von Funktionswerten einer Funktion.

**15.** Verfahren nach Anspruch 12 oder 13,
eingesetzt zur näherungsweisen Ermittlung von Funktionswerten einer polynomialen Funktion.

**16.** Verfahren nach Anspruch 12 oder 13,
eingesetzt zur näherungsweisen Ermittlung von Funktionswerten einer Funktion,

- bei der die Funktion eine polynomiale Funktion ist, und
- bei der ein gemeinsamer Faktor der Koeffizienten der polynomialen Funktion ausgeklammert wird.

**17.** Verfahren nach Anspruch 12 oder 13,
eingesetzt zur Durchführung von Fließkommaarithmetik.

**18.** Verfahren nach Anspruch 12 oder 13,
eingesetzt zur Datenkompression.

**19.** Verfahren nach Anspruch 12 oder 13,
eingesetzt zur Datenkompression, wobei zusätzlich eine Lauflängencodierung durchgeführt wird.

FIG 1

FIG 2

FIG 3

# FIG 4

P

PLA

| DSP | Hardwareerweiterung |

Argument x der Funktion — 401

Ausgabe des Wertes x an die Intervallhardware — 402

eventuell parallele Operationen — 403

Ermittlung der Größenordnungszahl G durch logische Verknüpfung der Bits im Betrag von x und des Vorzeichens — 404

Bereitstellen der durch G indizierten Werte $\{a_i\}$ der Koeffiziententabelle — 405

Funktionswertberechnung nach $^{(\#)}$

$f(x) = a \cdot (a_0 + a_1 \cdot x + a_2 \cdot x^2 + \ldots)$ — 406

# FIG 5

P

PLA

| DSP |
|---|

| Hardwareerweiterung |
|---|

| Mantissenwert x | ~ 501 |
|---|---|

| Ausgabe des Wertes x an die Intervallhardware | ~ 502 |
|---|---|

504

| eventuell parallele Operationen | ~ 503 |
|---|---|

| Ermittlung der Größen-ordnungszahl G durch logische Verknüpfung der Bits im Betrag von x |
|---|

| Bereitstellen der durch G indizierten Werte M & E | ~ 505 |
|---|---|

G

| Manthisse : = X · M Exponent : = Exponent + E | ~ 506 |
|---|---|

# FIG 6

| | | |
|---|---|---|
| Datenwort (12Bit) | 000000101101 bin | ~601 |
| Bestimmen der Position des höchstwertigen Bits | 5 dez | ~602 |

In welchem der folgenden Bittiefenbereiche liegt diese Position ?

| Bereich | Nr. | binär | | |
|---|---|---|---|---|
| 0..1 -> | 0 | 00 | | |
| 2..5 -> | 1 | 01 | 01 bin | ~603 |
| 6..9 -> | 2 | 10 | | |
| 10..11 -> | 3 | 11 | | |

| | | |
|---|---|---|
| Bereichbits und relevante Datenbits nacheinander weiterreichen * | ... 01 101101 ... | ~604 |

| Europäisches Patentamt | **EUROPÄISCHER RECHERCHENBERICHT** | Nummer der Anmeldung EP 97 12 1766 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | BERNAY: "An MSI concept etc." COMPUTER DESIGN., Bd. 11, Nr. 6, 1972, LITTLETON, MASSACHUSETTS US, Seiten 65-73, XP002058846 * Seite 65 - Seite 68 * | 1-19 | G06F17/30 |
| X | Proc. 17th Int. Workshop, WG '91: Graph-Theoretic COncepts in Computer Science, Germany, Seiten 219-225 Damaschke: 'Logic Arrays etc.' XP002058848 * Zusammenfassung * | 1-19 | |
| A | COCKING ET AL: "Address determination etc." IBM TECHNICAL DISCLOSURE BULLETIN., Bd. 22, Nr. 10, März 1980, NEW YORK US, Seiten 4670-4672, XP002058847 * das ganze Dokument * | 1,12 | |
| A | PATENT ABSTRACTS OF JAPAN vol. 17, no. 471 (P-1601), 26.August 1993 & JP 05 108835 A (FUJI XEROX) * Zusammenfassung * | 1,12 | RECHERCHIERTE SACHGEBIETE (Int.Cl.6) G06F |

Der vorliegende Recherchenbericht wurde für alle Patentansprüche erstellt

| Recherchenort | Abschlußdatum der Recherche | Prüfer |
|---|---|---|
| DEN HAAG | 13.März 1998 | Cohen, B |